# EUROPEAN PATENT APPLICATION

(11) **EP 4 550 532 A1**
(43) Date of publication of application: **07.05.2025**
(21) Application number: 24793059.7
(22) Date of filing: 19.04.2024
(51) Int. Cl.: H01M 10/658, H01M 50/271, H01M 50/213

(54) **BATTERY MODULE AND BATTERY PACK INCLUDING SAME**

(30) Priority: 20.04.2023 KR 20230052133
(71) Applicant: LG Energy Solution, Ltd., Seoul 07335 (KR)
(72) Inventor: AN, Ji Myong, Daejeon 34122 (KR); JEON, Byeong Jun, Daejeon 34122 (KR)
(74) Representative: Plasseraud IP
(86) International application number: PCT/KR2024/005292
(87) International publication number: WO 2024/219874

(57) **Abstract**

A battery module according to one example of the present invention comprises a plurality of battery cells including a first terminal having a vent portion and a second terminal disposed apart from the first terminal, a cell case having an insertion opening opened such that the plurality of battery cells is inserted, a bottom on which the plurality of battery cells is seated, and a plurality of first terminal holes provided in the bottom, a first sealing member disposed between the second terminal of the battery cell and the first terminal hole in a state where the battery cell is seated on the bottom of the cell case so that the second terminal of the battery cell is exposed to the first terminal hole, and a potting portion provided in the inner space of the cell case to surround the plurality of battery cells.

## Description

### Technical Field

The present invention relates to a battery module and a battery pack comprising the same, which specifically relates to a battery module for preventing chain ignition and a battery pack for preventing chain ignition.

This application claims the benefit of priority based on Korean Patent Application No. 10-2023-000052133 dated April 20, 2023, the disclosure of which is incorporated herein by reference in its entirety.

### Background Art

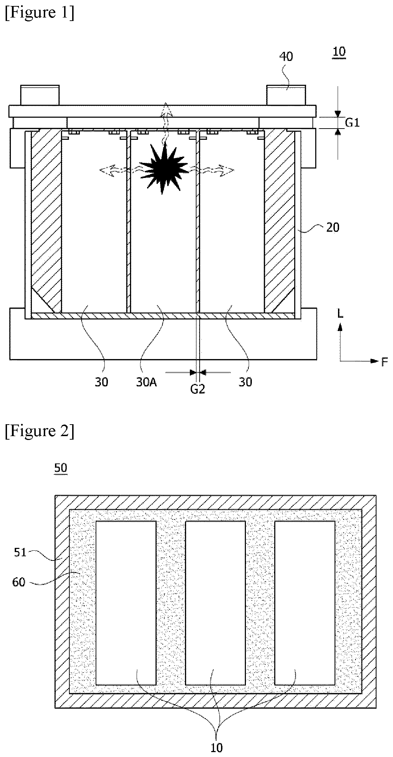

Figure 1 schematically shows a conventional battery module (10), and Figure 2 schematically shows a conventional battery pack (50).

Referring to Figure 1, the conventional battery module (10) comprises a cell case (20), at least one battery cell (30, 30A), and a cell cover (40). At least one battery cell (30) is accommodated in the cell case (20), and a plurality of battery cells (30, 30A) is accommodated in the cell case (20), and then the cell cover (40) is coupled to the cell case (20).

The battery cell (30, 30A) comprises positive electrode and negative electrode current collectors, separators, active materials, electrolytes, and the like, which can be repeatedly charged and discharged by electrochemical reactions.

Meanwhile, ignition may occur in the battery cell (30) due to external force or internal short-circuit, and the like. The battery module (10) comprises a plurality of battery cells (30), and when one battery cell (30A) is ignited, flame transfer occurs to the periphery of the ignited battery cell (30A), whereby chain ignition may occur between adjacent battery cells (30).

When any one battery cell (30A) ignites inside the battery module (10), a structure that prevents the flame from spreading to surrounding battery cells (30) of the ignited battery cell (30A) is required.

Referring to Figure 1, in the battery module (10), a cover gap (G1) exists between the cell cover (40) and an end of the battery cell (30). Also, in the internal space of the battery module (10), a cell gap (G2) exists between adjacent battery cells (30).

At this time, the flame emitted from the ignited battery cell (30A) may be transmitted in the longitudinal direction (L) of the battery cell (30A) through the cover gap (G1), and may be transmitted in the lateral direction (F, array direction) of the battery cell (30A) through the cell gap (G2), whereby chain ignition may be caused. Accordingly, to prevent chain ignition of the battery cells (30), a technology for filling the cover gap (G1) and the cell gap (G2) is required.

However, in the conventional battery module (10), the battery cell (30) is accommodated in the cell case (20), and then a bus bar is spot-welded to the terminal of the battery cell (30), so that there is a problem that it is difficult to inject a flame-retardant material (e.g., potting resin) into the inside space of the cell case (20).

Referring to Figure 2, the battery pack (50) is assembled so that a plurality of battery modules (10) is electrically connected, and the pack case (51) is for protecting the plurality of battery modules (10). As one example, in the battery pack (50), the plurality of battery modules (10) may have a structure laminated in the longitudinal direction (L) of the battery cells.

Accordingly, when the battery cell (30) of any one battery module (10) explodes, there is a problem that adjacent battery modules (10) are sequentially ignited when the flame is transmitted along the longitudinal direction (L) of the battery cell.

Conventionally, since it is difficult to inject a potting resin into the battery module (10), a method of forming a potting portion (60) by injecting the potting resin into the inside of the pack case (51) of the battery pack (50) is adopted.

However, when the potting resin is injected into the pack case (51) of the battery pack (50), there is a problem that the injected amount of potting resin increases and the weight of the battery pack (50) increases.

### Disclosure

### Technical Problem

The present invention is intended to provide a battery module capable of preventing chain ignition of battery cells by blocking flame transmission upon ignition of an adjacent battery cell through a protection member provided to cover a negative electrode terminal of the battery cell, and a battery pack comprising the same.

Also, the present invention is intended to provide a battery module capable of preventing chain ignition of battery cells by blocking flame transmission upon ignition of an adjacent battery cell, as the battery cells are divided by a potting portion in the internal space of the battery module, and a battery pack comprising the same.

In addition, the present invention is intended to provide a battery module capable of leakage of a potting resin upon injection of the potting resin into the battery module, and a battery pack comprising the same.

Furthermore, the present invention is intended to provide a battery module capable of blocking flame transmission between adjacent battery modules and capable of reducing a gap between adjacent battery modules, in a battery pack in which a plurality of battery modules is arranged along the longitudinal direction of battery cells, and a battery pack comprising the same.

### Technical Solution

To solve the above-described problems, the battery module according to one example of the present invention comprises a plurality of battery cells including a first terminal having a vent portion and a second terminal disposed apart from the first terminal, a cell case having an insertion opening opened such that the plurality of battery cells is inserted, a bottom on which the plurality of battery cells is seated, and a plurality of first terminal holes provided in the bottom, a first sealing member disposed between the second terminal of the battery cell and the first terminal hole in a state where the battery cell is seated on the bottom of the cell case so that the second terminal of the battery cell is exposed to the first terminal hole, and a potting portion provided in the internal space of the cell case to surround the plurality of battery cells.

Also, the first sealing member may be bonded along the circumferential direction of the first terminal hole, and provided to expose at least a partial region of the second terminal to the outside of the first terminal hole, and the first sealing member may allow sealing between the internal space of the cell case and the first terminal hole.

In addition, the first sealing member may have a ring shape with an inner diameter larger than the diameter of the first terminal hole.

Furthermore, the first sealing member may comprise a double-sided tape.

Also, the battery module may comprise a cell cover having a plurality of second terminal holes arranged to face the plurality of first terminal holes, respectively and at least one resin injection hole provided to enable fluid movement with the internal space of the cell case, and mounted on the insertion opening of the cell case.

**In** addition, the potting portion may be formed by curing a potting resin injected into the internal space of the cell case through the resin injection hole.

Also, the cell cover may have an air hole connected to enable fluid movement with the internal space of the cell case. The air hole may be disposed to be apart from the resin injection hole, and the size of the air hole may be formed differently from the size of the resin injection hole, and for example, the size of the air hole may be formed smaller than the size of the resin injection hole.

In addition, the cell case may have a plurality of fitting protrusions protruding on the insertion opening side toward the internal space, and the cell cover may have a plurality of fitting holes into which each fitting protrusion is fitted.

Furthermore, the cell case may comprise at least one case pillar protruding from the bottom of the cell case toward the insertion opening, and the cell cover may comprise at least one cover pillar extending toward the bottom of the cell case and connected to the case pillar.

Also, the cover pillar and the case pillar may be provided to be fitted.

In addition, the battery module may comprise a second sealing member disposed between the cover pillar and the case pillar.

Also, the plurality of battery cells may comprise one or more first battery cells disposed in the cell case such that the second terminal is exposed to the first terminal hole, and the first terminal is exposed to the second terminal hole, and one or more second battery cells disposed in the cell case such that the first terminal is exposed to the first terminal hole, and the second terminal is exposed to the second terminal hole.

In addition, the first and second battery cells may each be provided so that the first terminal and the second terminal are positioned in opposite directions along the longitudinal direction of the battery cell.

Furthermore, the battery module may comprise a first bus bar electrically connected to the first terminal of the first battery cell through the second terminal hole and located outside the cell case, a second bus bar electrically connected to the second terminal of the second battery cell through the second terminal hole, a third bus bar electrically connected to the second terminal of the first battery cell through the first terminal hole and located outside the cell case, and a fourth bus bar electrically connected to the first terminal of the second battery cell through the first terminal hole and located outside the cell case.

Also, a plurality of the first sealing members may be provided. In this instance, the first battery cell may be disposed in the cell case so that the second terminal of the first battery cell is exposed to the first terminal hole, and the second battery cell may be disposed in the cell case so that the first terminal of the second battery cell is exposed to the first terminal hole. In such a structure, among the plurality of first sealing members, the first sealing member disposed between the second terminal of the first battery cell and the first terminal hole may be bonded along the circumferential direction of the first terminal hole, and provided to expose at least a partial region of the second terminal to the outside of the first terminal hole. Furthermore, among the plurality of first sealing members, the first sealing member disposed between the first terminal of the second battery cell and the first terminal hole may be bonded along the circumferential direction of the first terminal hole, and provided to expose at least a partial region of the first terminal to the outside of the first terminal hole.

In addition, each first sealing member may allow sealing between the internal space of the cell case and the first terminal hole.

### Advantageous Effects

As discussed above, a battery module related to at least one example of the present invention, and a battery pack including the same have the following effects.

It is possible to prevent chain ignition of battery cells by blocking flame transmission upon ignition of an adjacent battery cell through a protective member provided to cover negative electrode terminals of battery cells disposed in a battery module.

Also, as battery cells are partitioned by a potting portion in the internal space of a battery module, it is possible to prevent chain ignition of battery cells by blocking flame transmission upon ignition of an adjacent battery cell.

In addition, when a potting resin is injected into a battery module, it is possible to prevent leakage of the potting resin, and particularly, it is possible to prevent leakage of the potting resin into an insertion opening side of a cell case and the bottom side of the cell case.

Furthermore, in a battery pack in which a plurality of battery modules is arranged along the longitudinal direction of battery cells, it is possible to block flame transmission between adjacent battery modules, and it is possible to reduce a gap between adjacent battery modules.

### Description of Drawings

Figure 1 schematically shows a conventional battery module.
Figure 2 schematically shows a conventional battery pack.
Figure 3 is an exploded perspective diagram of a battery module according to one example of the present invention.
Figure 4 is a cross-sectional diagram of the cell case shown in Figure 3.
Figure 5 is an exploded perspective diagram of the cell case, battery cell, and cell cover shown in Figure 3.
Figure 6 is a perspective diagram of a battery module in which the components shown in Figure 5 are combined.
Figure 7 is a perspective diagram of a battery module in a state where first to fourth bus bars are separated.
Figure 8 is a perspective diagram of the battery module in a state where a second protective member is coupled.
Figure 9 is a cross-sectional diagram in a cut state along Line X-X of Figure 8.
Figure 10 is an enlarged cross-sectional diagram of Part A of Figure 9.
Figure 11 is a schematic diagram of a battery pack according to one example of the present invention.
Figure 12 is a schematic cross-sectional diagram of a battery pack according to one example of the present invention.
Figure 13 is an enlarged schematic diagram of Part B of Figure 12.

### Mode for Invention

Hereinafter, with reference to the accompanying drawings, a battery module for preventing chain ignition and a battery pack for preventing chain ignition according to one example of the present invention will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

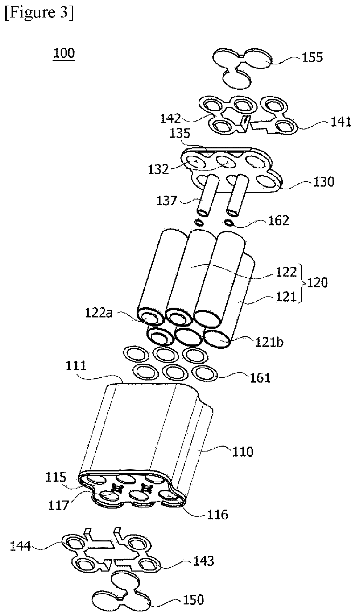

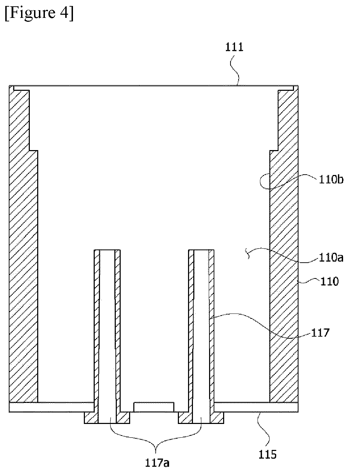

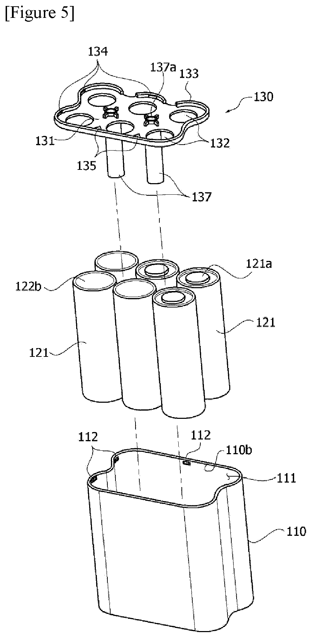

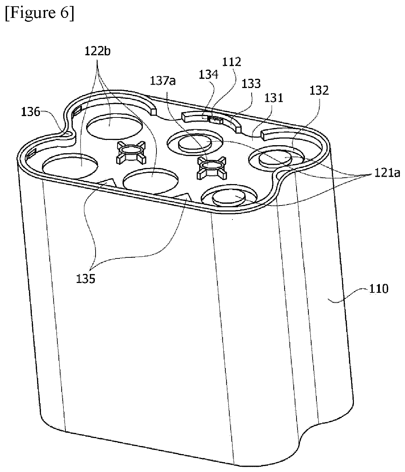

Figure 3 is an exploded perspective diagram of a battery module (100) according to one example of the present invention, Figure 4 is a cross-sectional diagram of the cell case shown in Figure 3, Figure 5 is an exploded perspective diagram of the cell case, battery cell, and cell cover shown in Figure 3, and Figure 6 is a perspective diagram of a battery module in which the components shown in Figure 5 are combined.

The battery module (100) related to one example of the present invention comprises a plurality of battery cells (120: 121, 122) including a first terminal (121a, 122a) having a vent portion and a second terminal (121b, 122b) disposed apart from the first terminal (121a, 122a).

Each battery cell (120: 121, 122) has a first terminal (121a, 122a) and a second terminal (121b, 122b), wherein as one example, the first terminal (121a, 122a) may be a positive electrode terminal, and the second terminal (121b, 122b) may be a negative electrode terminal which is an electrode with opposite polarity to the first terminal (121a, 122a). Also, in each battery cell (120), the first terminal (121a, 122a) and the second terminal (121b, 122b) may be provided to be positioned in opposite directions to each other along the longitudinal direction (L) of the battery cell (120). That is, the first terminal (121a, 122a) may be provided at one end along the longitudinal direction (L) of the battery cell (120), and the second terminal (121b, 122b) may be provided at the other end along the longitudinal direction (L).

Also, a vent portion is provided at the first terminal (121a, 122a) of the battery cell (120). A vent portion may be formed at the first terminal (121a, 122a) along one end edge of the battery cell (120). For example, the vent portion may be formed at a central location of one end of the battery cell (120) where the first terminal (121a, 122a) is located.

The vent portion is intended to relieve the internal pressure of the battery cell (120), where the vent portion is formed at one end of the battery cell (120) to have a relatively weak strength, and thus provided to be preferentially broken upon internal ignition of the battery cell (120).

In this way, when the internal pressure of the battery cell (120) increases above the preset critical pressure (e.g., the rupture pressure of the vent portion), the vent portion is intended to relieve the internal pressure of the battery cell (120) while the vent portion is ruptured at the battery cell (120). Accordingly, when a fire occurs within the battery cell (120), the internal pressure of the battery cell (120) increases, and the frame is emitted to the outside of the battery cell (120), while the vent portion provided in the first terminal (121a, 122a), which is a positive electrode terminal, is ruptured.

Also, the battery cell (120) may be a cylindrical battery cell or a rectangular battery cell.

Referring to Figures 3 to 5, the battery module (100) comprises a cell case (110) having an insertion opening (111) opened such that the plurality of battery cells (120:121, 122) is inserted, a bottom (115) on which the plurality of battery cells (120) is seated, and a plurality of first terminal holes (116) provided in the bottom (115).

Also, the cell case (110) has an internal space (110a) in which the plurality of battery cells (120: 121, 122) is accommodated. The cell case (110) may be opened in one direction and may have a cylindrical shape having an internal space (110a). A plurality of battery cells (120) is seated on the bottom (115), and a plurality of first terminal holes (116) is provided therein. In addition, the insertion opening (111) may be provided to face the bottom (115). The insertion opening (111) and the bottom (115) may be provided to face each other along the longitudinal direction of the battery cell (120).

The first terminal holes (116) may be formed in the same number as the number of battery cells (120) accommodated in the internal space (110a). In a state where one end of the battery cell (120) is seated on the bottom (115), the first terminal hole (116) performs a function in which a partial region of the first terminal (121a, 122a) or the second terminal (121b, 122b) is exposed to the outside along the insertion direction of the battery cell (120). Accordingly, the first terminal hole (116) may have a diameter smaller than the diameter of the battery cell (120) to prevent the battery cell (120) from falling out of the cell case (110).

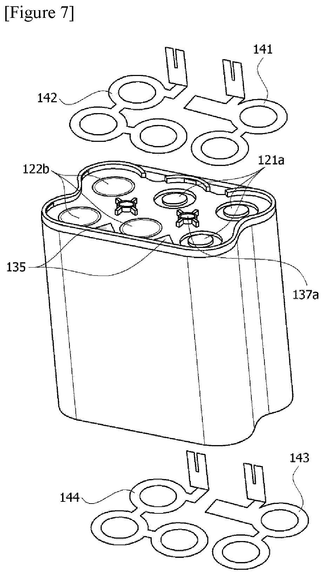

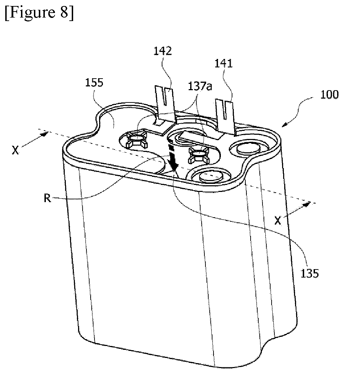

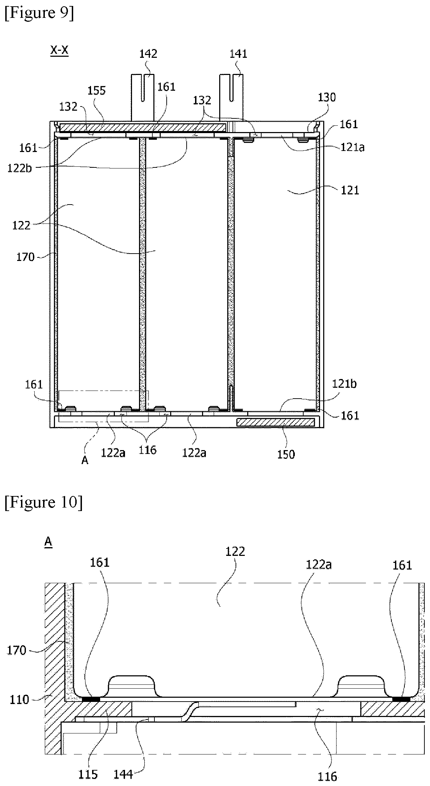

Figure 7 is a perspective diagram of a battery module in a state where first to fourth bus bars are separated, Figure 8 is a perspective diagram of the battery module in a state where a second protective member is coupled, Figure 9 is a cross-sectional diagram in a cut state along Line X-X of Figure 8, and Figure 10 is an enlarged cross-sectional diagram of Part A of Figure 9.

Referring to Figures 3 and 9, the battery module (100) may comprise a first protective member (150) provided to surround the first terminal hole (116), to which the second terminal (121b) is exposed, in a state where the battery cell (121) is seated on the bottom (115) of the cell case (110) so that the second terminal (121b) of the battery cell (for example, 121) is exposed to the first terminal hole (116).

The first protective member (150) performs a function of preventing shock or flame applied from the outside of the cell case (110) from being transmitted to the second terminal (121b) of the battery cell (121) through the first terminal hole (116). The first protective member (150) may have a plate shape with a predetermined thickness, and may have a diameter larger than that of the first terminal hole (116) to surround the entire region of the first terminal hole (116). For example, the first protective member (150) may be located outside the cell case (110), and may be fixed to the cell case (110) from the outside of the cell case (110) by a method through bonding, and the like.

In addition, the battery module (100) may comprise a cell cover (130) having a plurality of second terminal holes (132) mounted on the insertion opening (111) of the cell case (110) and arranged to face the plurality of first terminal holes (116), respectively. When the battery cell (120) is disposed in the internal space (110a) of the cell case, one end of the battery cell may be supported on the bottom (115), and the other end of the battery cell may be supported on the cell cover (130). The number of first terminal holes (116) and the number of second terminal holes (132) may be provided to be the same. When the cell cover (130) is mounted on the cell case (110), the second terminal hole (132) performs a function that a partial region of the first terminal (121a, 122a) or the second terminal (121b, 122b) located at the other end is exposed to the outside in a state where one end of the battery cell (120) is seated on the bottom (115). Accordingly, the second terminal hole (132) may have a diameter smaller than the diameter of the battery cell (120) to prevent the battery cell (120) from falling out of the cell case (110) or the cell cover (130).

Referring to Figures 3 and 5, the plurality of battery cells (120) may be inserted so that the first terminal or the second terminal faces the bottom (115) of the cell case (110).

For example, the plurality of battery cells (120) may comprise one or more first battery cells (121) disposed in the cell case (110) so that the second terminal (121b) is exposed to the first terminal hole (116) and the first terminal (121a) is exposed to the second terminal hole (132).

In addition, the plurality of battery cells (120) may comprise one or more second battery cells (122) disposed in the cell case (110) so that the first terminal (122a) is exposed to the first terminal hole (116) and the second terminal (122b) is exposed to the second terminal hole (132). The first battery cell (121) and the second battery cell (122) have the same configuration, and are different from each other only in the direction where they are inserted into the cell case (110). Specifically, the first battery cell (121) is inserted so that the second terminal (121b) faces the bottom (115) of the cell case (110), and the second battery cell (122) is inserted so that the first terminal (122a) faces the bottom (115) of the cell case (110).

In such a structure, the plurality of first terminal holes (116) each expose the second terminal (121b) of the first battery cell (121) to the outside of the cell case (110), or expose the first terminal (122a) of the second battery cell (122) to the outside of the cell case (110).

In addition, the plurality of second terminal holes (132) each expose the first terminal (121a) of the first battery cell (121) to the outside of the cell case (110), or expose the second terminal (122b) of the second battery cell (122) to the outside of the cell case (110).

Referring to Figures 3 and 8, the battery module (100) may comprise a second protective member (155) provided to surround the second terminal hole (132), to which the second terminal (122b) is exposed, in a state where the second battery cell (122) is disposed in the cell case (110) so that the second terminal (122b) of the second battery cell (122) is exposed to the second terminal hole (132) of the cell cover (130).

The second protective member (155) performs a function of preventing shock or flame applied from the outside of the cell cover (130) from being transmitted to the second terminal (122b) of the second battery cell (122) through the second terminal hole (132). The second protective member (155) may have a plate shape with a predetermined thickness, and may have a diameter larger than that of the second terminal hole (132) to surround the entire region of the second terminal hole (132). For example, the second protective member (150) may be located outside the cell cover (130), and may be fixed to the cell cover (130) from the outside of the cell cover (130) by a method through bonding, and the like.

**In** summary, the first protective member (150) performs a function of preventing shock or flame applied from the outside of the cell case (110) from being transmitted to the second terminal (121b) of the first battery cell (121) through the first terminal hole (116), and the second protective member (155) performs a function of preventing shock or flame applied from the outside of the cell cover (130) from being transmitted to the second terminal (122b) of the second battery cell (122) through the second terminal hole (132).

The first and second protective members (150, 155) may each be formed of materials having heat resistance and insulation properties, and may include, for example, glass fiber or mica.

Also, the battery module (100) may comprise a plurality of bus bars (141 to 144) that are electrically connected to the first and second battery cells (121, 122), respectively.

Specifically, the battery module (100) may comprise a first bus bar (141) electrically connected to the first terminal (121a) of the first battery cell (121) through the second terminal hole (132) and located outside the cell case (110), and a third bus bar (143) electrically connected to the second terminal (121b) of the first battery cell (121) through the first terminal hole (116) and located outside the cell case (110).

In addition, the first bus bar (141) may be welded to the first terminal (121a) of the first battery cell (121) through the second terminal hole (132), where at least a partial region (welded region) is located inside the cell cover (130), and the remaining region is located outside the cell cover (130). Furthermore, the third bus bar (143) may be welded to the second terminal (121b) of the first battery cell (121) through the first terminal hole (116), where at least a partial region (welded region) is located inside the cell case (110), and the remaining region is located outside the cell case (110).

Also, the battery module (100) may comprise a second bus bar (142) electrically connected to the second terminal (122b) of the second battery cell (122) through the second terminal hole (132) and located outside the cell case (110), and a fourth bus bar (144) electrically connected to the first terminal (122a) of the second battery cell (122) through the first terminal hole (116) and located outside the cell case (110).

In addition, the second bus bar (142) may be welded to the second terminal (122b) of the second battery cell (122) through the second terminal hole (132), where at least a partial region (welded region) is located inside the cell cover (130), and the remaining region is located outside the cell cover (130). Furthermore, the fourth bus bar (144) may be welded to the second terminal (122a) of the second battery cell (122) through the first terminal hole (116), where at least a partial region (welded region) is located inside the cell case (110), and the remaining region is located outside the cell case (110).

At this time, the first protective member (150) may be disposed to surround the third bus bar (143) and the first terminal hole (116), and may be fixed to the cell case (110) to cover the region where the second terminal (121b) of the first battery cell (121) exposed through the first terminal hole (116) outside the bottom (115) of the cell case (110) is exposed.

Also, the second protective member (155) may be disposed to surround the second bus bar (142) and the second terminal hole (132), and may be fixed to the cell cover (130) to cover the region where the second terminal (122b) of the second battery cell (122) exposed from the outside of the cell cover (130) through the second terminal hole (132) is exposed.

In addition, the battery module (100) may comprise a potting portion (170) provided in the internal space (110a) of the cell case (110) to surround the plurality of battery cells (120: 121, 122).

The potting portion (170) may be formed by curing a potting resin (R) injected into the internal space (110a) of the cell case (110). The potting portion (170) may be provided in the internal space (110a) of the cell case (110) to surround the outer surface of each battery cell (121, 122), and the potting portion (170) may perform a function of blocking flame transmission in the lateral direction (F, arrangement direction) of the battery cell (120) upon internal ignition of the battery cells (121, 122) within the cell case (110), and improve the strength of the cell case (110). The potting resin (R) may have flame retardancy, and as one example, the potting resin (R) may be a flame-retardant composite material made of silicon as a base.

Referring to Figures 8 and 9, the cell cover (130) may have at least one resin injection hole (135) provided to enable fluid movement with the internal space (110a) of the cell case (110). At this time, the potting portion (170) may be formed by curing a potting resin (R) injected into the internal space of the cell case (110) through the resin injection hole (135).

Referring to Figures 7 and 8, after the plurality of battery cells (121, 122) is accommodated inside the cell case (110), and the cell cover (130) is mounted on the insertion opening (111) of the cell case (110), the welding process of the first to fourth bus bars (141 to 144) may proceed. Thereafter, the potting resin (R) may be injected into the internal space of the cell case (110) through the resin injection hole (135).

In this instance, upon injection of the potting resin (R), it is important to prevent the potting resin (R) from leaking to the outside of the cell case (110).

The cell case (110) may have a plurality of fitting protrusions (112) protruding on the insertion opening (111) side toward the internal space (110a), and the cell cover (130) may have a plurality of fitting holes (134) into which each fitting protrusion (112) is fitted. The cell cover (130) may be in contact with at least a partial region of the inner surface (110b) of the cell case along the circumferential direction, and may be fitted to the cell case (110) by the fitting protrusions (112) formed on the inner surface (110b) of the cell case.

The cell cover (130) may have a cover portion (131) having a plurality of second terminal holes (132) and one or more resin injection holes (135), and one or more cover coupling portions (133) provided with one or more fitting holes (134) and arranged along the circumferential direction of the cover portion (131). The fitting hole (134) may be an opening that penetrates the cover coupling portion (133) in the lateral direction (F).

Also, the cover portion (131) is provided to cover the internal space (110a) of the cell case (110). The plurality of second terminal holes (132) and one or more resin injection holes (135) may be openings that penetrate the cover portion (131) up and down.

In addition, the cover coupling portion (133) may extend from the edge of the cover portion (131) along the longitudinal direction of the battery cell (120), and as one example, the cover coupling portion (133) may extend with respect to the cover portion (131) vertically, and is formed in a shape corresponding to the inner surface of the cell case (110), and thus is provided to contact the inner surface (110b) of the cell case (110) at least in some regions along the circumferential direction.

Furthermore, the resin injection hole (135) may be provided at a boundary portion between the cover coupling portion (133) and the cover portion (131), and the resin injection hole (135) may be disposed on the same plane as the second terminal hole (132), which is disposed to be spaced apart from the second terminal hole (132).

Also, the fitting hole (134) of the cell cover (130) is fitted with the fitting protrusion (112) of the cell case (110) in a hook manner, thereby being capable of improving the coupling force of the cell cover (130) to the cell case (110). In addition, without forming a hole structure in the cell case (110), it is possible to prevent the potting resin (R) from leaking to the outside of the cell case (110) when the potting resin (R) is injected into the internal space of the cell case (110).

In addition, the battery module (100) may comprise a first sealing member (161) disposed between the second terminal (121b) of the battery cell (121) and the first terminal hole (116) in a state where the battery cell (121) is seated on the bottom (115) of the cell case (110) so that the second terminal (121b) of the battery cell (e.g., the first battery cell (121)) is exposed to the first terminal hole (116). The first sealing member (161) may be bonded to the cell case (110).

Referring to Figures 3 and 9, the first sealing member (161) may be bonded along the circumferential direction of the first terminal hole (116), and provided to expose at least a partial region of the second terminal (122b) to the outside of the first terminal hole (116).

The first sealing member (161) may perform a function of sealing between the internal space (110a) of the cell case (110) and the first terminal hole (116). That is, upon injection of the potting resin (R), it is possible to prevent the potting resin (R) from leaking to the outside of the cell case (110) through the first terminal hole (116).

The first sealing member (161) may have a ring shape having an inner diameter larger than the diameter of the first terminal hole (116). In addition, the first sealing member (161) may comprise a double-sided tape having a ring shape. That is, in the first sealing member (161), one side of both sides of the tape may be bonded along the circumferential direction of the first terminal hole (116), and the other side may be bonded to the end of the battery cell (120) disposed on the first terminal hole (116) side.

A plurality of the first sealing members (161) may be provided therein That is, the first sealing member (161) may be attached to each first terminal hole (116).

Referring to Figure 9, the first battery cell (121) may be disposed in the cell case (110) so that the second terminal (121b) of the first battery cell (121) is exposed to the first terminal hole (116), and the second battery cell (122) may be disposed in the cell case (110) so that the first terminal (122a) of the second battery cell (122) is exposed to the first terminal hole (116).

Here, the first sealing member (161) disposed between the second terminal (121b) of the first battery cell (121) and the first terminal hole (116) may be bonded along the circumferential direction of the first terminal hole (116), and provided to expose at least a partial region of the second terminal (121b) to the outside of the first terminal hole (116).

In addition, referring to Figure 10, the first sealing member (161) disposed between the first terminal (122a) of the second battery cell (122) and the first terminal hole (116) may be bonded along the circumferential direction of the first terminal hole (116), and provided to expose at least a partial region of the first terminal (122a) to the outside of the first terminal hole (116).

Each first sealing member (116) performs a function of sealing between the internal space (110a) of the cell case (110) and the first terminal hole (116).

In addition, the cell case (110) may comprise at least one case pillar (117) protruding from the bottom (115) of the cell case (110) toward the insertion opening (111), and the cell cover (130) may comprise at least one cover pillar (137) extending toward the bottom (115) of the cell case (110) and connected to the case pillar (117).

The case pillar (117) may be disposed between adjacent first terminal holes (116), and the case pillar (117) may be provided to protrude in the longitudinal direction (L) of the battery cell (120) from the bottom (115) of the cell case (110). When the cell cover (130) is assembled to the cell case (110), each case pillar (117) may be inserted into the cover pillar (137) of the cell cover (130).

The cover pillar (137) may be formed to extend along the longitudinal direction (L) of the battery cell between adjacent second terminal holes (132). The cover pillar (137) may be mounted on the case pillar (117) of the cell case (110), and as one example, the case pillar (117) may be inserted into the end of the cover pillar (137), thereby being fitted to the cover pillar (137).

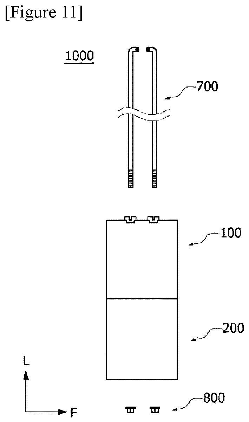

The case pillar (117) may have a first hollow (117a), and the cover pillar (137) may have a second hollow (137a). At this time, the case pillar (117) may be fitted into the cover pillar (137), and the first hollow (117a) and the second hollow (137a) may be connected. In such a structure, a mounting bolt (700, see Figure 11) passes through the first hollow (117a) and the second hollow (137a) from the outside of the battery module (100), thereby enabling to penetrate the battery module (100).

As the cover pillar (137) and the case pillar (117) are fitted, the potting resin (R) may leak through a coupling portion. To prevent this, the battery module (100) may comprise a second sealing member (162) disposed between the cover pillar (137) and the case pillar (117).

The second sealing member (162) may also be a double-sided tape having a ring shape. At this time, the second sealing member (162) may be provided to be bonded to the end of the cover pillar (137) and the end of the case pillar (117), respectively. In addition, the second sealing member (162) may also include an O-ring.

Also, the cell cover (130) may have an air hole (136) connected to enable fluid movement with the internal space (110a) of the cell case (110). As one example, the cell cover (130) may be curved so that a portion in contact with the inner surface of the cell case (110), that is, a portion of the cover coupling portion (133) is spaced apart from the inner surface of the cell case (110), and the air hole (136) may also be formed through the separation space.

Referring to Figure 6, when the potting resin (R) is injected into the internal space of the cell case (110), the air in the internal space (110a) of the cell case (110) may be discharged to the outside of the cell case (110) through the air hole (136). Therefore, when the potting resin (R) is injected into the internal space of the cell case (110), the air in the internal space (110a) is discharged to the outside of the cell case (110) through the air hole (136), so that it is possible to prevent defects in the potting portion (170) due to air bubbles.

Hereinafter, one manufacturing method of the battery module (100) having such a structure will be described. A plurality of first sealing members (161) may be bonded to the ends of the first and second battery cells (121, 122) or to the edge of the first terminal hole (116). Thereafter, the first and second battery cells (121, 122) are inserted into the internal space (110a) of the cell case (110) so that the portion to which the first sealing member (161) is bonded is seated on the bottom (115) of the cell case (110).

Next, the cell cover (130) is mounted on the insertion opening (111) side of the cell case (110) to surround the plurality of first and second battery cells (121, 122). At this time, the fitting hole (134) of the cell cover (130) may be fitted with the fitting protrusion (112) of the cell case (110).

Next, first to fourth bus bars (141 to 144) are each welded.

Also, the potting resin (R) is injected into the internal space (110a) of the cell case (110) through the resin injection hole (135) of the cell cover (130). While the potting resin (R) is injected into the internal space, air in the internal space may be discharged to the outside through the air hole (136). While the potting resin (R) is cured in the internal space of the cell case (110), it forms a potting portion (170) surrounding the outer surface of the battery cells (121, 122).

In addition, the first protective member (150) is coupled to the cell case (110) to surround, on the outside of the bottom (115) of the cell case (110), the region where the second terminal (121b) of the first battery cell (121) is exposed to the first terminal hole (116) of the cell case (110).

Furthermore, the second protective member (155) is coupled to the cell cover (130) to surround, on the outside of the cell cover (130), the region where the second terminal (122b) of the second battery cell (122) is exposed to the second terminal hole (132) of the cell cover (130).

At this time, on the outside of the bottom (115) of the cell case (110), the first protective member (150) may be fixed to the cell case (110) to cover the third bus bar (143), and in addition, on the outside of the cell cover (130), the second protective member (150) may be fixed to the cell cover (130) to cover the second bus bar (142).

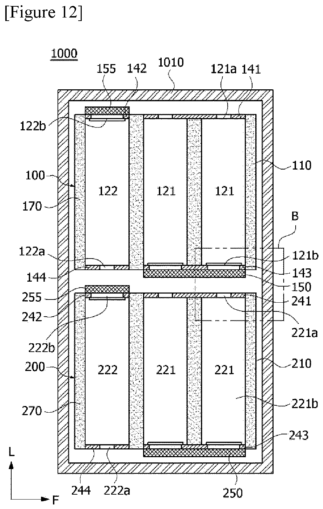

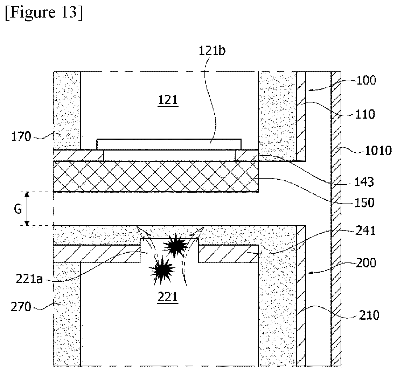

Figure 11 is a schematic diagram of a battery pack (1000) according to one example of the present invention, Figure 12 is a schematic cross-sectional diagram of a battery pack according to one example of the present invention, and Figure 13 is an enlarged schematic diagram of Part B of Figure 12.

The battery pack (1000) according to one example of the present invention may comprise a plurality of battery modules (100, 200), a pack case (1010) accommodating the plurality of battery modules (100, 200), a mounting bolt (700) for connecting adjacent battery modules (100, 200), and a fastening member (800) fastened to the mounting bolt (700).

For example, in the battery module (100), after the cell cover (130) is mounted on the cell case (110), the mounting bolt (700) may penetrate the case pillar (117) and the cover pillar (137), and may connect the cell cover (130) and the cell case (110) so that one end is caught on the bottom (115) of the cell case (110) and the other end protrudes out of the cell cover (130). At this time, the fastening member (800) may be coupled to the other end of the mounting bolt (700), and fixed to the cell cover (130). Also, a nut coupled to the mounting bolt (700) may be used as the fastening member (800). In addition, the mounting bolt (700) may sequentially penetrate two or more battery modules (100, 200) to connect them.

Also, the first and second battery modules (100, 200) may each be arranged in a row along the longitudinal direction (L) of the battery cell (121, 221). In addition, in a state where they are arranged in a row, adjacent first and second battery modules (100, 200) may be assembled through the mounting bolt (700) and the fastening member (800) fastened to the mounting bolt (700).

The plurality of battery modules (100, 200) is the same as the battery module (100) described through Figures 1 to 10, which is divided into and designated as, in this document, first and second battery modules (100, 200) along the order in which they are arranged in the battery pack (1000).

As described above, the first and second battery modules (100, 200) each comprise a cell case (110, 210), a first battery cell (121, 221) disposed in the cell case (110, 210) and having a first terminal (121a, 221a) with a vent portion and a second terminal (121b, 221b), and a second battery cell (122, 222) disposed in the cell case (110, 210) and having a first terminal (122a, 222a) with a vent portion and a second terminal (122b, 222b). In addition, a potting part (170, 270) may be provided within each battery module (100, 200).

Also, the first and second battery modules (100, 200) may each be provided with first to fourth bus bars (141 to 144, 241 to 244).

In the battery pack (1000), the first battery cell (221) of the second battery module (200) may be arranged so that the first terminal (221a) faces the second terminal (121b) of the first battery cell (121) in the first battery module (100), and the second battery cell (122) of the first battery module (100) may be arranged so that the first terminal (122a) faces the second terminal (222b) of the second battery cell (222) in the second battery module (200).

In this instance, the first and second battery modules (100, 200) are each provided with a first protective member (150, 250) and a second protective member (155, 255).

The first and second protective members (150, 250, 155, 255) are intended to block flame transmission in the longitudinal direction (L) of the battery cell upon internal ignition of battery cells within any one of the battery modules (100, 200).

Specifically, in the first battery module (100), the first protective member (150) may be provided to surround the second terminal (121b) of the first battery cell (121), and in the second battery module (200), the first protective member (250) may be provided to surround the second terminal (221b) of the first battery cell (221).

In addition, in the first battery module (100), the second protective member (155) may be provided to surround the second terminal (122b) of the second battery cell (122), and in the second battery module (200), the second protective member (255) may be provided to surround the second terminal (222b) of the second battery cell (222).

Referring to Figures 12 and 13, when the vent portion is ruptured upon internal ignition from the first battery cell (221) in the second battery module (200) and the flame is emitted through the ruptured first terminal (221a), the first protective member (150) of the first battery module (100) reflects the emitted flame, whereby it is possible to block flame transmission.

At this time, the first protective member (150) provided in the first battery module (100) may be arranged to be apart from a predetermined distance (G) with respect to the first terminal (221a) of the first battery cell (221), and the gap (G) may be set to 5mm or less, preferably, 3mm or less. In the battery pack (100), the gap (G) may be a gap between the first battery module (100) and the second battery module (200).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a battery module related to at least one example of the present invention and a battery pack comprising the same, it is possible to prevent chain ignition of battery cells by blocking flame transmission upon ignition of the adjacent battery cell through a protective member provided to cover a negative electrode terminal of a battery cell disposed in the battery module.

## Claims

1. A battery module comprising:
a plurality of battery cells including a first terminal having a vent portion and a second terminal disposed apart from the first terminal;
a cell case having an insertion opening opened such that the plurality of battery cells is inserted, a bottom on which the plurality of battery cells is seated, and a plurality of first terminal holes provided in the bottom;
a first sealing member disposed between the second terminal of the battery cell and the first terminal hole in a state where the battery cell is seated on the bottom of the cell case so that the second terminal of the battery cell is exposed to the first terminal hole; and
a potting portion provided in the inner space of the cell case to surround the plurality of battery cells.

2. The battery module according to claim 1, wherein
the first sealing member is bonded along the circumferential direction of the first terminal hole, and provided to expose at least a partial region of the second terminal to the outside of the first terminal hole, and
the first sealing member allows sealing between the internal space of the cell case and the first terminal hole.

3. The battery module according to claim 2, wherein
the first sealing member has a ring shape with an inner diameter larger than the diameter of the first terminal hole.

4. The battery module according to claim 2, wherein
the first sealing member comprises a double-sided tape.

5. The battery module according to claim 1, further comprising
a cell cover having a plurality of second terminal holes arranged to face the plurality of first terminal holes, respectively and at least one resin injection hole provided to enable fluid movement with the internal space of the cell case, and mounted on the insertion opening of the cell case.

6. The battery module according to claim 5, wherein
the potting portion is formed by curing a potting resin injected into the internal space of the cell case through the resin injection hole.

7. The battery module according to claim 5, wherein
the cell cover has an air hole connected to enable fluid movement with the internal space of the cell case.

8. The battery module according to claim 5, wherein
the cell case has a plurality of fitting protrusions protruding on the insertion opening side toward the internal space, and
the cell cover has a plurality of fitting holes into which each fitting protrusion is fitted.

9. The battery module according to claim 5, wherein
the cell case comprises at least one case pillar protruding from the bottom of the cell case toward the insertion opening, and
the cell cover comprises at least one cover pillar extending toward the bottom of the cell case and connected to the case pillar.

10. The battery module according to claim 9, wherein
the cover pillar and the case pillar are provided to be fitted, and
the battery module further comprises a second sealing member disposed between the cover pillar and the case pillar.

11. The battery module according to claim 5, wherein the plurality of battery cells comprises:
one or more first battery cells disposed in the cell case such that the second terminal is exposed to the first terminal hole, and the first terminal is exposed to the second terminal hole, and
one or more second battery cells disposed in the cell case such that the first terminal is exposed to the first terminal hole, and the second terminal is exposed to the second terminal hole.

12. The battery module according to claim 11, wherein
in each of the first and second battery cells, the first terminal and the second terminal are positioned in opposite directions along the longitudinal direction of the battery cell.

13. The battery module according to claim 11, comprising:
a first bus bar electrically connected to the first terminal of the first battery cell through the second terminal hole and located outside the cell case;
a second bus bar electrically connected to the second terminal of the second battery cell through the second terminal hole;
a third bus bar electrically connected to the second terminal of the first battery cell through the first terminal hole and located outside the cell case; and
a fourth bus bar electrically connected to the first terminal of the second battery cell through the first terminal hole and located outside the cell case.

14. The battery module according to claim 11, wherein
a plurality of the first sealing members is provided,
the first battery cell is disposed in the cell case so that the second terminal of the first battery cell is exposed to the first terminal hole,
the second battery cell is disposed in the cell case so that the first terminal of the second battery cell is exposed to the first terminal hole,
the first sealing member disposed between the second terminal of the first battery cell and the first terminal hole is bonded along the circumferential direction of the first terminal hole, and provided to expose at least a partial region of the second terminal to the outside of the first terminal hole, and
the first sealing member disposed between the first terminal of the second battery cell and the first terminal hole is bonded along the circumferential direction of the first terminal hole, and provided to expose at least a partial region of the first terminal to the outside of the first terminal hole.

15. The battery module according to claim 14, wherein
each first sealing member allows sealing between the internal space of the cell case and the first terminal hole.
